# EUROPEAN PATENT APPLICATION

(11) **EP 4 672 485 A1**
(43) Date of publication of application: **31.12.2025**
(21) Application number: 25186056.5
(22) Date of filing: 27.06.2025
(51) Int. Cl.: H01M 50/54, H01M 50/533, H01M 50/536, H01M 50/584

(54) **BATTERY CELL**

(30) Priority: 28.06.2024 KR 20240085666
(71) Applicant: SK On Co., Ltd., Seoul 03161 (KR)
(72) Inventor: MOON, Joo Ho, 34124 Daejeon (KR)
(74) Representative: Stolmár & Partner Patentanwälte PartG mbB

(57) **Abstract**

A battery cell includes an electrode assembly including a positive electrode, a negative electrode, and a separator; a case having an internal space in which the electrode assembly is accommodated; and a current collector electrically connected to an electrode tab of the electrode assembly, wherein the current collector includes a through-hole through which the electrode tab of the electrode assembly passes.

## Description

### TECHNICAL FIELD

The present disclosure generally relates to a battery cell.

### BACKGROUND

A secondary battery (battery cell) has attracted attention as a power source for various mobile devices and electric vehicles as a secondary battery is convenient in that a secondary battery may be charged and discharged, unlike a primary battery.

Such a secondary battery may have a structure in which an electrode assembly including a positive electrode, a negative electrode, and a separator stacked therein or wound in a roll form is accommodated in a case.

Recently, requirements for a high-capacity, high-output secondary battery have increased, and development of a secondary battery requiring high energy density, high performance, and high level of reliability corresponding to the requirements has been necessary.

### SUMMARY

An aspect of the present disclosure is to provide a battery cell having improved energy density. According to an aspect of the present disclosure, a battery cell including a plurality of electrode assemblies accommodated therein.

The battery cell of the present disclosure may be widely applied in green technology fields such as an electric vehicle, a battery charging station, and a solar power generation and wind power generation using batteries. Also, the battery cell of the present disclosure may be used in an eco-friendly electric vehicle, a hybrid vehicle, or the like, to ameliorate the effects of climate change by suppressing air pollution and greenhouse gas emissions.

According to an aspect of the present disclosure, a battery cell includes an electrode assembly including a positive electrode, a negative electrode, and a separator; a case having an internal space in which the electrode assembly is accommodated; and a current collector electrically connected to an electrode tab of the electrode assembly, wherein the current collector includes a through-hole through which the electrode tab of the electrode assembly passes.

The number of electrode tabs connected to the current collector may be three or more.

One surface of the current collector may include a first region close to a first edge with respect to the through-hole, and a second region close to a second edge opposing the first edge, and the electrode tab may include a first electrode tab connected to the first region, a second electrode tab connected to the second region, and at least one third electrode tab passing through the through-hole and connected to one surface of the current collector.

At least one of the third electrode tabs may pass through the through-hole and may be connected to one of the first region or the second region.

The first electrode tab may be connected to the first region while covering the first edge of the current collector, and the second electrode tab may be connected to the second region while covering the second edge of the current collector.

The through-hole may include a first through-hole adjacent to the first edge and a second through-hole adjacent to the second edge, the current collector may include a third region positioned between the first through-hole and the second through-hole, and at least one of the third electrode tabs may pass through one of the first through-hole or the second through-hole and may be connected to the third region.

The battery cell may further include one or more cap assemblies coupled to the case, closing the internal space and including a terminal portion disposed therein.

The battery cell may further include a connection member electrically connected to each of the current collector and the terminal portion.

The through-hole may include a first hole and a second hole, partitioned by the connection member.

The battery cell may further include one or more cap assemblies coupled to the case, closing the internal space and including a terminal portion disposed therein, the electrode tab may include a positive electrode tab and a negative electrode tab, the positive electrode tab and the negative electrode tab may extend in opposite directions, the case may include a first opening and a second opening spaced apart from each other, and the one or more cap assemblies may include a first cap assembly closing the first opening and a second cap assembly closing the second opening.

The electrode tab and the current collector may be connected to each other by welding.

According to an aspect of the present disclosure, a battery cell includes an electrode assembly including a positive electrode, a negative electrode, and a separator; a case having an internal space in which the electrode assembly is accommodated; and a current collector electrically connected to an electrode tab of the electrode assembly, the electrode assembly includes a plurality of electrode tabs connected to the positive electrode and the negative electrode, respectively, and the current collector includes a through-hole through which at least one of the plurality of electrode tabs passes.

### BRIEF DESCRIPTION OF DRAWINGS

Predetermined aspects, features, and advantages of the present disclosure are illustrated by the following detailed description with reference to the accompanying drawings.
FIG. 1 is an exploded perspective diagram illustrating a battery cell according to an embodiment of the present disclosure;
FIG. 2 is a perspective diagram illustrating a battery cell according to an embodiment of the present disclosure;
FIG. 3 is a perspective diagram illustrating a process in which an electrode assembly is coupled to a current collector in FIG. 2;
FIG. 4 is a perspective diagram illustrating a state in which an electrode assembly is coupled to a current collector;
FIG. 5 is a front diagram of FIG. 2;
FIG. 6 is a cross-sectional diagram taken along line I-I' in FIG. 2;
FIGS. 7 to 9 are a perspective diagram, a front diagram, and a cross-sectional diagram illustrating an example in which four electrode tabs are provided in an electrode assembly according to an embodiment of the present disclosure;
FIGS. 10 to 12 are a perspective diagram, a front diagram, and a cross-sectional diagram illustrating an example in which six electrode tabs are provided in an electrode assembly according to an embodiment of the present disclosure;
FIGS. 13 to 15 are a perspective diagram, a front diagram, and a cross-sectional diagram illustrating an example in which a current collector and a cap assembly are connected to each other by a connection member according to an embodiment of the present disclosure;
FIG. 16 is a front diagram illustrating an example in which a current collector and a cap assembly are connected to each other by a connection member and four electrode tabs are provided according to an embodiment of the present disclosure; and
FIG. 17 is a front diagram illustrating an example in which a current collector and a cap assembly are connected to each other by a connection member and sixth electrode tabs are provided according to an embodiment of the present disclosure.

### DETAILED DESCRIPTION

The embodiments of the present disclosure are illustrated in embodiments with reference to the accompanying drawings.

As for a detailed description of embodiments, it should be noted that the terms defined in a generally used dictionary should be interpreted as having the same meanings as the contextual meanings of the relevant technical idea and should not be interpreted as having ideal or exaggerated meanings unless they are clearly defined in the various embodiments.

**In** the drawings, the same elements will be indicated by the same reference numerals. Also, redundant descriptions and detailed descriptions of known functions and elements which may unnecessarily make the gist of the present disclosure obscure will not be provided. Even when the drawings illustrate components having the same reference number, the plurality of drawings do not refer to the same embodiment.

In embodiments, the terms, "include," "comprise," "is configured to," or the like of the description are used to indicate the presence of features, numbers, steps, operations, elements, portions or combination thereof, and do not exclude the possibilities of combination or addition of one or more features, numbers, steps, operations, elements, portions or combination thereof.

Also, in the description below, the terms, upper side, upper portion, lower side, lower portion, side surface, front surface, back surface, or the like, are denoted based on the directions illustrated in the drawing, and it is noted that the terms may be represented differently when the direction of an object changes.

The terms "first," "second," and the like may be used to distinguish one element from the other, and may not limit a sequence and/or an importance, or others, in relation to the elements.

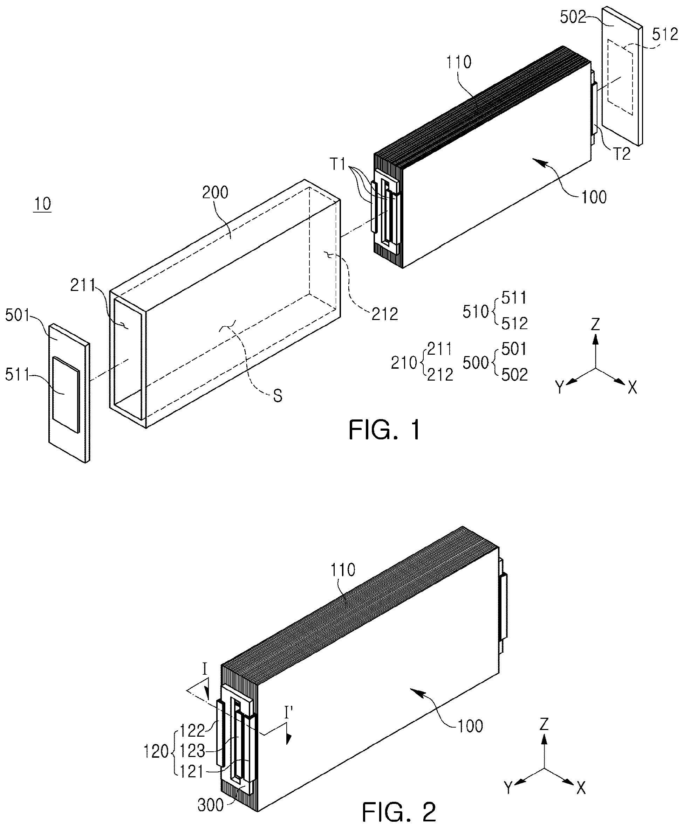

FIG. 1 is an exploded perspective diagram illustrating a battery cell according to an embodiment.

FIG. 2 is a perspective diagram illustrating a battery cell according to an embodiment.

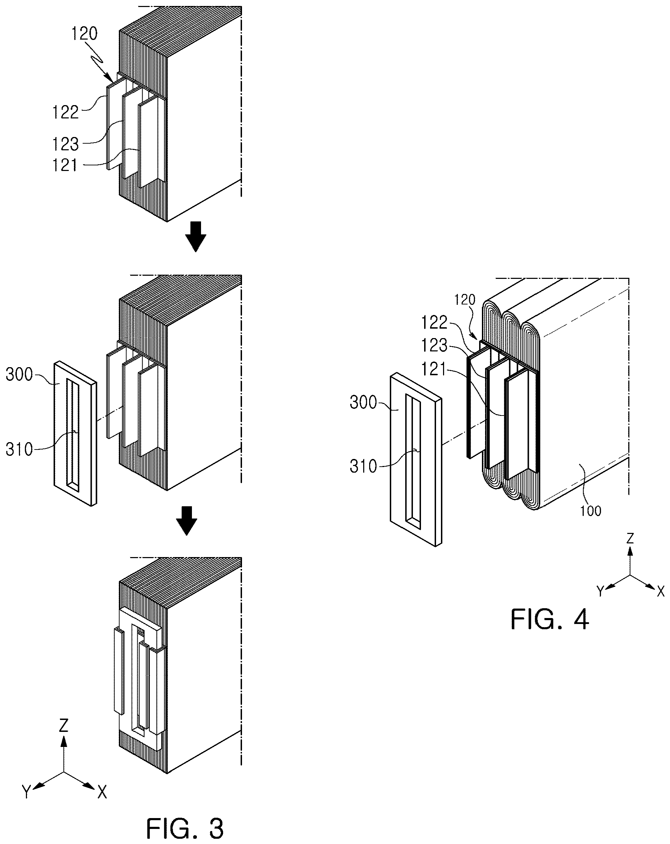

FIG. 3 is a perspective diagram illustrating a process in which an electrode assembly is coupled to a current collector in FIG. 2.

FIG. 4 is a perspective diagram illustrating a state in which an electrode assembly is coupled to a current collector.

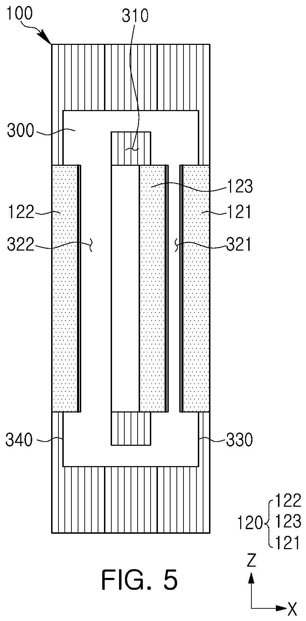

FIG. 5 is a front diagram of FIG. 2.

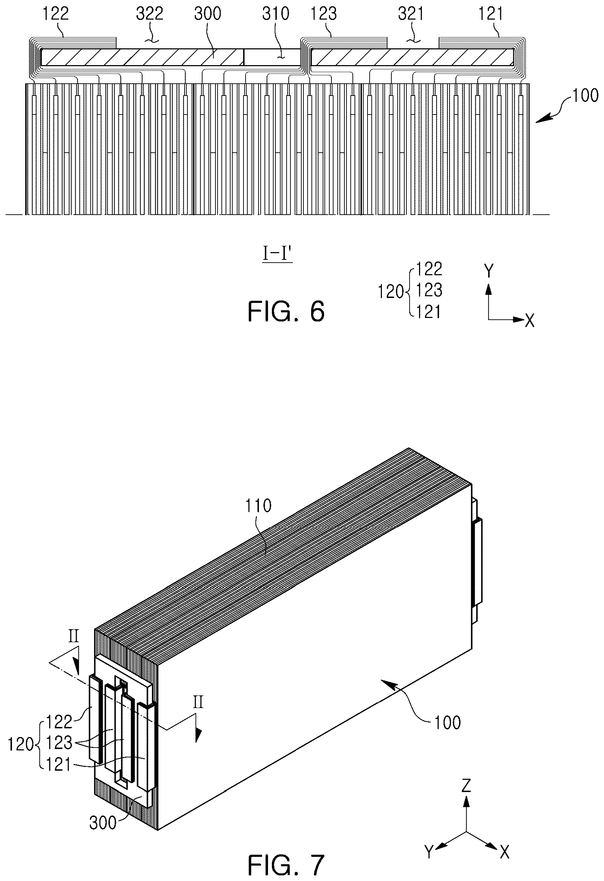

FIG. 6 is a cross-sectional diagram taken along line I-I' in FIG. 2.

Referring to FIGS. 1 to 6, a battery cell 10 according to an embodiment may include an electrode assembly 100 including a positive electrode, a negative electrode, and a separator, a case 200 having an internal space in which the electrode assembly 100 is accommodated, and a current collector 300 electrically connected to an electrode tab 120 of the electrode assembly 100. The current collector 300 may include a through-hole 310 through which the electrode tab 120 of the electrode assembly 100 may pass.

According to an embodiment, a battery cell 10 according to an embodiment may further include one or more cap assemblies 500 coupled to the case 200 to close an internal space of the case 200, and having a terminal portion 510 disposed therein.

The electrode assembly 100 may include a plurality of electrode plates 110 and a separator disposed between the electrode plates 110. For example, the electrode assembly 100 may be formed by stacking a plurality of positive electrode plates, a plurality of negative electrode plates, and one or more separators in a first direction X. Referring to FIG. 4, the electrode assembly 100 may have a jelly roll structure in which the positive electrode plate, the negative electrode plate, and the separator disposed therebetween are wound.

In embodiments, the battery cell 10 may include one or more electrode assemblies 100. When the battery cell 10 has a plurality of electrode assemblies, the electrode assemblies may be stacked in the first direction. The first direction may be the X-axis direction. For example, the electrode assembly 100 may include a plurality of jelly rolls. Alternatively, the electrode assembly 100 may have a single jelly roll structure.

The electrode tab 120 may be electrically connected to the terminal portion 510 of the cap assembly 500 through the current collector 300, such that a current flow path may be formed between the electrode assembly 100 and the terminal portion 510.

The electrode tab 120 may be configured to extend from at least one side of the electrode assembly 100. The electrode assembly 100 may include a plurality of electrode plates 110. At least one of the plurality of electrode plates 110 may include a coated portion coated with an active material and a non-coated portion not coated with an active material. The electrode tab 120 may refer to a bundle of non-coated portions extending from the plurality of electrode plates 110 included in an electrode assembly 100.

The electrode assembly 100 may include a plurality of electrode tabs 120. The electrode tab 120 may include a positive electrode tab T1, which is a bundle of non-coated portions extending from the positive electrode plates, and a negative electrode tab T2, which is a bundle of non-coated portions extending from the negative electrode plates. The electrode tab 120 may include a plurality of positive electrode tabs T1 and a plurality of negative electrode tabs T2. The positive electrode tabs and the negative electrode tabs of the electrode assembly 100 may extend in opposite directions. For example, the positive electrode tab T1 of the electrode tab 120 may be disposed side by side on one side of the electrode assembly 100, and the negative electrode tab T2 may be disposed side by side on the other side opposite to the one side of the electrode assembly 100. As illustrated in FIG. 2, the electrode tabs 120 disposed on one side of the electrode assembly 100 may have the same polarity.

Each of jelly rolls provided in the electrode assembly 100 may include at least one electrode tab 120. Each of jelly rolls provided in the electrode assembly 100 may include at least one positive electrode tab T1 and at least one negative electrode tab T2.

The electrode tabs 120 having the same polarity may be connected to and in contact with each other. As for connection between the electrode tabs 120 having the same polarity, laser welding or ultrasonic welding may be applied. However, any method which may electrically connect the electrode tabs 120 to each other may be applied in addition to laser welding or ultrasonic welding.

The case 200 may have an internal space S in which the electrode assembly 100 and the electrolyte (not illustrated) may be accommodated.

The case 200 may include a material having sufficient stiffness to protect the electrode assembly 100 therein and to maintain an exterior of the entire battery cell 10. For example, at least a portion of the case 200 may be formed of a metal material such as aluminum, iron, or stainless steel. However, the material of the case 200 is not limited thereto, and the case 200 may be formed of any material having sufficient stiffness to maintain the exterior of the battery cell 10 and to protect the electrode assembly 100 therein.

The case 200 may include a first opening 211 and a second opening 212 spaced apart from each other.

The case 200 may have an internal space S and may have a shape in which at least one side is open. For example, referring to FIG. 1, the case 200 may have a hexahedral shape in which a first opening 211 and a second opening 212 are formed on both ends in a third direction Y. The third direction may be the Y-axis direction. An internal space S may be formed between the first opening 211 and the second opening 212, and the electrode assembly 100 may be accommodated in the internal space S.

**In** the description below, the embodiment in which the battery cell 10 is a square cell is described. For example, an embodiment in which the case 200 have a hexahedral shape of which both sides are open as in FIG. 1 are described. However, the specific shape of the case 200 is not limited to the example illustrated in the drawing. The case 200 may be configured to have any shape as long as the internal space S to which the electrode assembly 100 may be inserted and accommodated is ensured. For example, the case may have a cylindrical shape of which an upper surface or a lower surface is open, or may have a polyhedral shape of which at least one side is open. That is, the shape of the battery cell 10 in an embodiment may be varied, such as a cylindrical cell, a coin-shaped cell, or the like.

The current collector 300 may be a plate-shaped member including a conductive metal, and may be electrically connected to the electrode tab 120 of the electrode assembly 100 and may work as a passage for current flow between the electrode assembly 100 and the terminal portion 510.

The current collector 300 may include a material having a specific level of stiffness. For example, the current collector 300 may be formed of aluminum or an aluminum alloy, which is a conductive metal material. However, the material of the current collector 300 is not limited to the examples described above.

The current collector 300 may include a through-hole 310 through which the electrode tab 120 may pass. A cross-section of the through-hole 310 may be rectangular. The through-hole 310 may be opened from one surface of the current collector 300 to the other surface such that the electrode tab 120 may pass through. However, a cross-section of the through-hole 310 may be sufficient such that the electrode tab 120 may pass therethrough, and is not necessarily limited to the aforementioned shape. The electrode tab 120 may pass through the through-hole 310 and may be connected to one surface 320 of the current collector 300. One surface 320 of the current collector 300 may refer to a surface of the current collector 300 facing the cap assembly 500.

The cap assembly 500 may be coupled to the opening 210 and may close the internal space S of the case 200.

The cap assembly 500 may include a terminal portion 510. The terminal portion 510 may be electrically connected to the electrode assembly 100 in the case 200. The electrode assembly 100 may be electrically connected to another component (e.g., conductive busbar) present externally of the battery cell 10 through the terminal portion 510.

In the battery cell 10, a plurality of the cap assembly 500 may be provided. For example, one or more cap assemblies 500 may include a first cap assembly 501 closing the first opening 211 and a second cap assembly 502 closing the second opening 212. One or more cap assemblies 500 may include a first cap assembly 501 and a second cap assembly 502 in which the first terminal portion 511 and the second terminal portion 512 having opposite polarities are disposed, respectively.

As illustrated in FIG. 1, the first cap assembly 501 and the second cap assembly 502 may be coupled to both ends of the case 200. For example, the first cap assembly 501 may have a first terminal portion 511, which is a negative electrode terminal, may be coupled and welded to the first opening 211 of the case 200 and may close the first opening 211. The second cap assembly 502 may have a second terminal portion 512, which is a positive electrode terminal, may be coupled and welded to the second opening 212 of the case 200 and may close the second opening 212. Accordingly, the first cap assembly 501 and the second cap assembly 502 may close both sides of the case 200 in which the electrode assembly 100 is accommodated.

As for the coupling between the cap assembly 500 and the case 200, a laser welding method may be applied, but the specific coupling method is not limited thereto.

According to an embodiment, the number of the electrode tabs 120 connected to the current collector 300 may be three or more.

Three or more electrode assemblies 100 may be accommodated in the case 200. For example, as illustrated in FIG. 4, the electrode assembly may have a form of a jelly roll in which the plurality of electrode plates 110 and a separator are wound.

The number of the electrode tabs 120 extending from one electrode assembly 100 may be three or more. For example, as illustrated in FIG. 3, the plurality of electrode tabs 120 may be disposed in one electrode assembly. Alternatively, as illustrated in FIG. 4, the plurality of electrode tabs 120 may be disposed in each of the plurality of jelly rolls.

According to an embodiment, one surface 320 of the current collector 300 may include a first region 321 close to the first edge 330 with respect to the through-hole 310, and a second region 322 close to the second edge 340 opposing the first edge 330. The electrode tab 120 may include a first electrode tab 121 connected to the first region 321, a second electrode tab 122 connected to the second region 322, and at least one third electrode tab 123 penetrating through the through-hole 310 and connected to one surface 320 of the current collector 300.

According to an embodiment, at least one of the third electrode tabs 123 may pass through the through-hole 310 and may be connected to one of the first region 321 or the second region 322. Referring to FIG. 5, the third electrode tab 123 may pass through the through-hole 310 and may be welded to the first region 321.

According to an embodiment, the first electrode tab 121 may be connected to the first region 321 while covering the first edge 330 of the current collector 300, and the second electrode tab 122 may be connected to the second region 322 while covering the second edge 340 of the current collector 300.

According to an embodiment, the electrode tab 120 and the current collector 300 may be connected to each other by welding.

The first edge 330 may be an edge spaced apart from the through-hole 310 in the first direction X and extending in the second direction Z. The second edge 340 may be an edge opposing the first edge 330 in the opposite direction of the first direction and extending in the second direction. The second direction may be the Z-axis direction.

The first electrode tab 121 may be connected to one surface 320 of the current collector 300. The one surface 320 of the current collector 300 may refer to a surface of the current collector 300 facing the cap assembly 500. The first region 321 may be a region between the through-hole 310 and the first edge 330. When a plurality of the through-holes 310 are provided, the first region 321 may be a region between the through-hole 310 adjacent to the first edge 330 and the first edge 330. The first electrode tab 121 may pass through the through-hole 310, may be bent and may be contact with the first region 321. The first electrode tab 121 may be connected to the first region 321 while covering the first edge 330 of the current collector 300. The first electrode tab 121 may be bent to cover the first edge 330.

The second electrode tab 122 may be connected to one surface 320 of the current collector 300. The one surface 320 of the current collector 300 may refer to a surface facing the cap assembly 500 from the current collector 300. The second region 322 may be a region between the through-hole 310 and the second edge 340. The second electrode tab 122 may pass through the through-hole 310, may be bent and may be in contact with the second region 322. The second electrode tab 122 may be connected to the second region 322 while covering the second edge 340 of the current collector 300. The second electrode tab 122 may be bent to cover the second edge 340.

The third electrode tab 123 may pass through the through-hole 310 and may be connected to the first region 321.

The third electrode tab 123 is illustrated as not being in contact with the first electrode tab 121 or the second electrode tab 122 while covering the current collector 300, or the third electrode tab 123 may overlap the first electrode tab 121 or the second electrode tab 122.

The electrode tab 120 and the current collector 300 may be electrically connected to each other. For example, the electrode tab 120 and the current collector 300 may be in contact with and bonded to each other by welding and may be electrically connected to each other.

The welding process may be performed through the front surface of the electrode tab 120 while covering one surface of the current collector 300. In this case, since the current collector 300 is disposed on the back surface of the electrode tab 120, damage to the internal region of the electrode assembly 100 by welding may be prevented. The front surface of the electrode tab 120 may be in a direction facing the cap assembly 500.

As for connection between the electrode tab 120 and the current collector 300, laser welding or ultrasonic welding may be applied. However, in addition to laser welding and ultrasonic welding, any method which may electrically connect the electrode tab 120 and the current collector 300 may be applied.

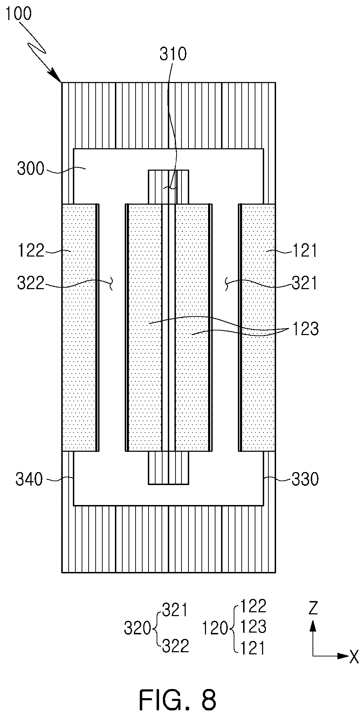

FIGS. 7 to 9 are a perspective diagram, a front diagram, and a cross-sectional diagram illustrating an example in which four electrode tabs are provided in an electrode assembly according to an embodiment.

Referring to FIGS. 7 to 9, according to an embodiment, the number of the electrode tabs 120 connected to the current collector 300 may be three or more.

Four electrode assemblies 100 may be accommodated in the case 200. As illustrated in FIG. 4, the electrode assembly may be in the form of a jelly roll in which a plurality of electrode plates 110 and a separator are wound. The electrode tab 120 may be disposed in each of the plurality of jelly rolls, such that four electrode tabs 120 may be provided.

The number of the electrode tabs 120 extending from one electrode assembly 100 may be three or more. For example, as illustrated in FIG. 7, a plurality of electrode tabs 120 may be disposed in one electrode assembly. That is, the number of electrode tabs 120 extending from one electrode assembly 100 may be four.

The first electrode tab 121 may be connected to one surface 320 of the current collector 300. The one surface 320 of the current collector 300 may refer to a surface of the current collector 300 facing the cap assembly 500. The first region 321 may be a region between the through-hole 310 and the first edge 330. When a plurality of the through-holes 310 are provided, the first region 321 may be a region between the through-hole 310 adjacent to the first edge 330 and the first edge 330. The first electrode tab 121 may pass through the through-hole 310, may be bent and may be in contact with the first region 321. The first electrode tab 121 may be connected to the first region 321 while covering the first edge 330 of the current collector 300. The first electrode tab 121 may be bent to cover the first edge 330.

The second electrode tab 122 may be connected to one surface 320 of the current collector 300. The one surface 320 of the current collector 300 may refer to a surface facing the cap assembly 500 from the current collector 300. The second region 322 may be a region between the through-hole 310 and the second edge 340. The second electrode tab 122 may pass through the through-hole 310, may be bent and may be in contact with the second region 322. The second electrode tab 122 may be connected to the second region 322 while covering the second edge 340 of the current collector 300. The second electrode tab 122 may be bent to cover the second edge 340.

A portion of the third electrode tab 123 may be connected to the first region 321 through the through-hole 310. The other portion of the third electrode tab 123 may pass through the through-hole 310 and may be connected to the second region 322.

The third electrode tab 123 is illustrated as not being in contact with the first electrode tab 121 or the second electrode tab 122 while covering the current collector 300, or the third electrode tab 123 may overlap the first electrode tab 121 or the second electrode tab 122.

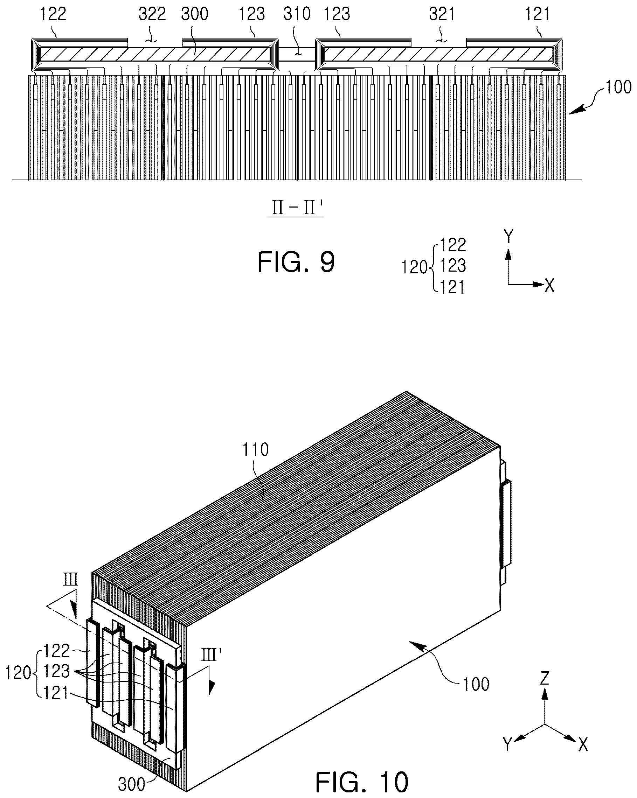

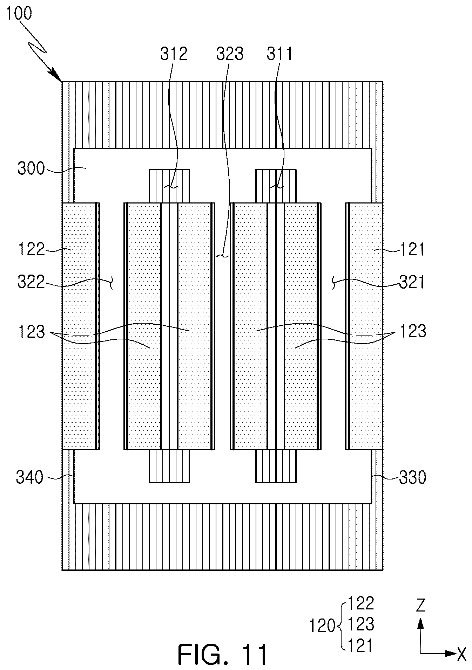

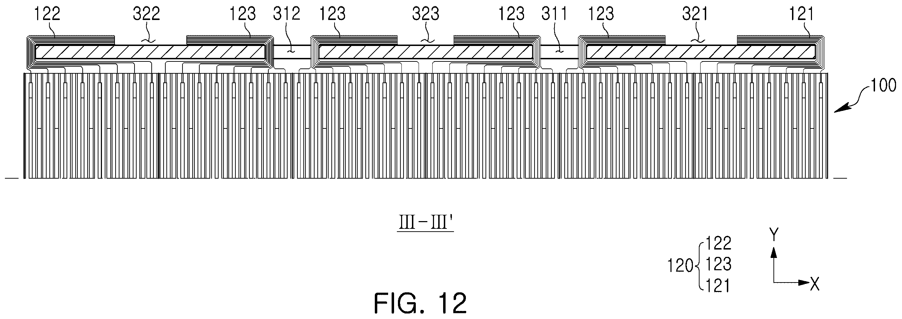

FIGS. 10 to 12 are a perspective diagram, a front diagram, and a cross-sectional diagram illustrating an example in which six electrode tabs are provided in an electrode assembly according to an embodiment.

Referring to FIGS. 10 to 12, according to an embodiment, a plurality of the through-hole 310 may be provided. For example, the through-hole 310 may include a first through-hole 311 adjacent to the first edge 330 and a second through-hole 312 adjacent to the second edge 340. The current collector 300 may include a third region 323 positioned between the first through-hole 311 and the second through-hole 312. At least one of the third electrode tabs 123 may pass through one of the first through-hole 311 or the second through-hole 312 and may be connected to the third region 323.

The region between the first through-hole 311 and the first edge 330 may be the first region 321. The region between the second through-hole 312 and the second edge 340 may be the second region 322. The region between the first through-hole 311 and the second through-hole 312 may be the third region 323.

The first electrode tab 121 may be connected to the first region 321. The second electrode tab 122 may be connected to the second region 322.

One of the third electrode tabs 123 may be connected to the first region 321 through the first through-hole 311. One of the third electrode tabs 123 may be connected to the second region 322 through the second through-hole 312.

One of the third electrode tabs 123 may be connected to the third region 323 through the first through-hole 311. One of the third electrode tabs 123 may be connected to the third region 323 through the second through-hole 312.

One of the third electrode tabs 123 may be connected to the third region 323 through the third through-hole 313.

The third electrode tab 123 is illustrated as not being in contact with the first electrode tab 121 or the second electrode tab 122 while covering the current collector 300, or the third electrode tab 123 may overlap the first electrode tab 121 or the second electrode tab 122.

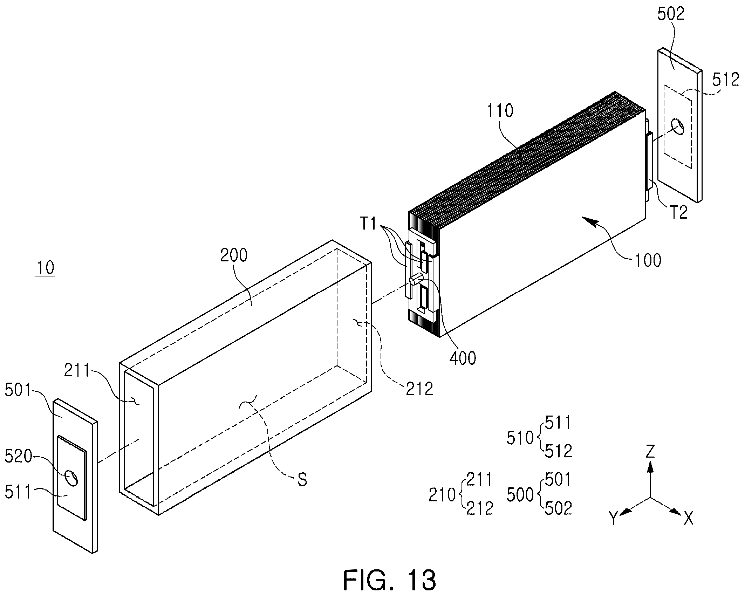

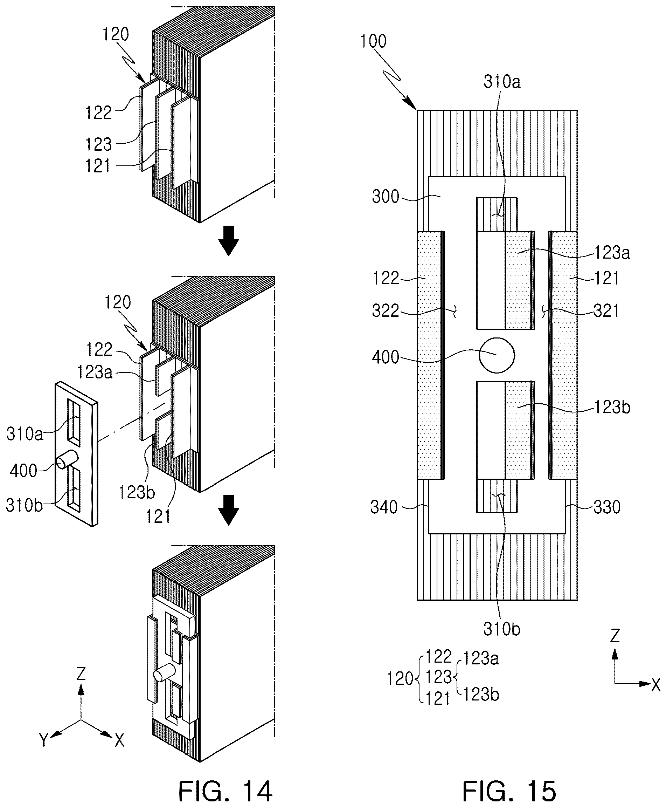

FIGS. 13 to 15 are a perspective diagram, a front diagram, and a cross-sectional diagram illustrating an example in which a current collector and a cap assembly are connected to each other by a connection member according to an embodiment.

Referring to FIGS. 13 to 15, according to an embodiment, a connection member 400 electrically connected to each of the current collector 300 and the terminal portion 510 may be further included.

According to an embodiment, the through-hole 310 may include a first hole 310a and a second hole 310b partitioned by the connection member 400.

The connection member 400 may be configured to protrude in a direction from one surface 320 of the current collector 300 toward an outer region of the electrode assembly 100. For example, the connection member 400 may be provided as a pin-shaped structure penetrating the current collector 300, and at least a portion may be disposed to protrude in the third direction Y, which is the direction in which the cap assembly 500 is assembled, on one surface 320 of the current collector 300. The third direction may be a Y-axis direction.

At least a portion of the connection member 400 may be in contact with the current collector 300, and the other portion may be in contact with the terminal portion 510 of the cap assembly 500. The connection member 400 may be inserted and coupled to the coupling hole 520 formed in the terminal portion 510.

The connection member 400 may include a conductive material and may electrically connect the current collector 300 to the terminal portion 510 of the cap assembly 500.

The first hole 310a and the second hole 310b may be spaced apart from each other in a second direction Z with respect to the connection member 400. The second direction may be a Z-axis direction.

The third electrode tab 123 may include an avoidance portion to pass through the first hole 310a and the second hole 310b without interfering with the connection member 400. The avoidance portion may have a notch shape. The third electrode tab 123 may include a first passing-through portion 123a and a second passing-through portion 123b partitioned by the connection member 400. The first passing-through portion 123a may pass through the first hole 310a and may be connected to one of the first region 321 or the second region 322. The second passing-through portion 123b may pass through the second hole 310b and may be connected to one of the first region 321 or the second region 322. The third electrode tab 123 is illustrated as not being in contact with the first electrode tab 121 or the second electrode tab 122 while covering the current collector 300, but the third electrode tab 123 may overlap the first electrode tab 121 or the second electrode tab 122.

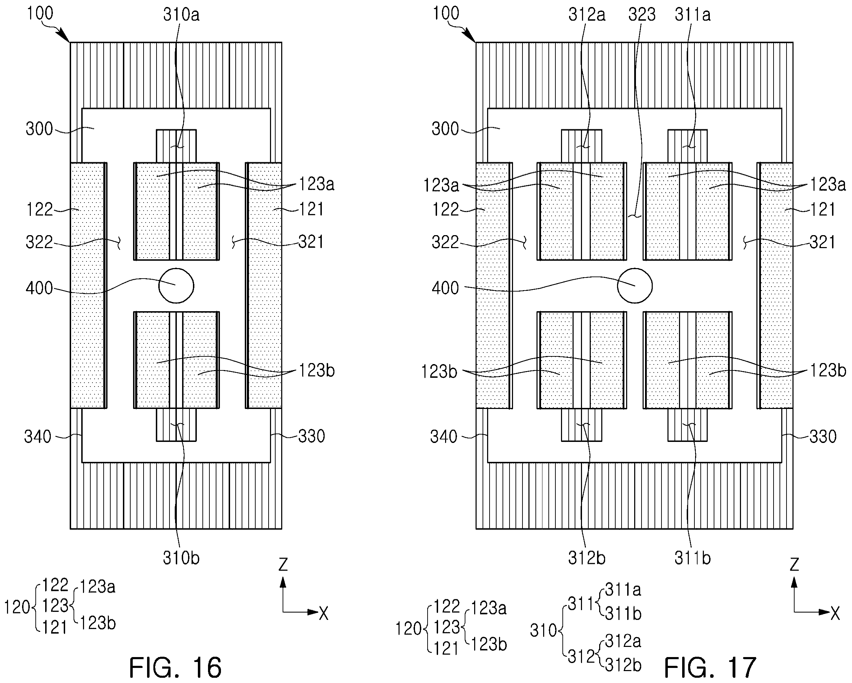

FIG. 16 is a front diagram illustrating an example in which a current collector and a cap assembly are connected to each other by a connection member and four electrode tabs are provided according to an embodiment.

Referring to FIG. 16, a plurality of third electrode tab 123 may be provided. The third electrode tab 123 may include a plurality of first passing-through portions 123a and a plurality of second passing-through portions 123b partitioned by the connection member 400. When one of the first passing-through portions 123a passes through the first hole 310a and is connected to the first region 321, the other may pass through the first hole 310a and may be connected to the second region 322. When one of the second passing-through portions 123b passes through the second hole 310b and is connected to the first region 321, the other may pass through the second hole 310b and may be connected to the second region 322. The third electrode tab 123 is illustrated as not being in contact with the first electrode tab 121 or the second electrode tab 122 while covering the current collector 300, but third electrode tab 123 may overlap the first electrode tab 121 or the second electrode tab 122.

FIG. 17 is a front diagram illustrating an example in which a current collector and a cap assembly are connected to each other by a connection member and sixth electrode tabs are provided according to an embodiment.

Referring to FIG. 17, a plurality of through-holes 310 may be provided. The through-hole 310 may include a first through-hole 311 and a second through-hole 312. The plurality of through-holes 310 may be partitioned by a connection member 400. The first through-hole 311 may be partitioned by the connection member 400. The first through-hole 311 may include a first hole 311a and a second hole 311b partitioned by the connection member 400. The second through-hole 312 may be partitioned by the connection member 400. The second through-hole 312 may include a first hole 312a and a second hole 312b partitioned by the connection member 400.

According to the aforementioned embodiments, a battery cell having improved energy density may be provided. For example, according to an embodiment, a battery cell including a plurality of of electrode assemblies accommodated therein may be provided.

Only specific examples of implementations of predetermined embodiments are described. Variations, improvements and enhancements of the disclosed embodiments and other embodiments may be made with respect to the disclosure of this patent document.

(Aspect 1) A battery cell, comprising: an electrode assembly including a positive electrode, a negative electrode, and a separator; a case having an internal space in which the electrode assembly is accommodated; and a current collector electrically connected to an electrode tab of the electrode assembly, wherein the current collector includes a through-hole through which the electrode tab of the electrode assembly passes.

(Aspect 2) The battery cell of aspect 1, wherein the number of electrode tabs connected to the current collector are three or more.

(Aspect 3) The battery cell of aspect 1 or 2, wherein one surface of the current collector includes a first region close to a first edge with respect to the through-hole, and a second region close to a second edge opposing the first edge, and wherein the electrode tab includes a first electrode tab connected to the first region, a second electrode tab connected to the second region, and at least one third electrode tab passing through the through-hole and connected to one surface of the current collector.

(Aspect 4) The battery cell of aspect 3, wherein at least one of the third electrode tabs passes through the through-hole and is connected to one of the first region or the second region.

(Aspect 5) The battery cell of aspect 3 or 4, wherein the first electrode tab is connected to the first region while covering the first edge of the current collector, and wherein the second electrode tab is connected to the second region while covering the second edge of the current collector.

(Aspect 6) The battery cell of any one of aspects 3 to 5, wherein the through-hole includes a first through-hole adjacent to the first edge and a second through-hole adjacent to the second edge, wherein the current collector includes a third region positioned between the first through-hole and the second through-hole, and wherein at least one of the third electrode tabs passes through one of the first through-hole or the second through-hole and is connected to the third region.

(Aspect 7) The battery cell of any one of aspects 1 to 6, further comprising: one or more cap assemblies coupled to the case, closing the internal space and including a terminal portion disposed therein.

(Aspect 8) The battery cell of aspect 7, further comprising: a connection member electrically connected to each of the current collector and the terminal portion.

(Aspect 9) The battery cell of aspect 8, wherein the through-hole includes a first hole and a second hole, partitioned by the connection member.

(Aspect 10) The battery cell of any one of aspects 1 to 9, further comprising: one or more cap assemblies coupled to the case, closing the internal space and including a terminal portion disposed therein; wherein the electrode tab includes a positive electrode tab and a negative electrode tab, wherein the positive electrode tab and the negative electrode tab extend in opposite directions from each other, wherein the case includes a first opening and a second opening spaced apart from each other, and wherein the one or more cap assemblies include a first cap assembly closing the first opening and a second cap assembly closing the second opening.

(Aspect 11) The battery cell of any one of aspects 1 to 10, wherein the electrode tab and the current collector are connected to each other by welding.

## Claims

1. A battery cell, comprising:
an electrode assembly including a positive electrode, a negative electrode, and a separator;
a case having an internal space in which the electrode assembly is accommodated; and
a current collector electrically connected to an electrode tab of the electrode assembly,
wherein the current collector includes a through-hole through which the electrode tab of the electrode assembly passes.

2. The battery cell of claim 1,
wherein the number of electrode tabs connected to the current collector are three or more.

3. The battery cell of claim 1 or 2,
wherein one surface of the current collector includes a first region close to a first edge with respect to the through-hole, and a second region close to a second edge opposing the first edge, and
wherein the electrode tab includes a first electrode tab connected to the first region, a second electrode tab connected to the second region, and at least one third electrode tab passing through the through-hole and connected to one surface of the current collector.

4. The battery cell of claim 3, wherein at least one of the third electrode tabs passes through the through-hole and is connected to one of the first region or the second region.

5. The battery cell of claim 3 or 4,
wherein the first electrode tab is connected to the first region while covering the first edge of the current collector, and
wherein the second electrode tab is connected to the second region while covering the second edge of the current collector.

6. The battery cell of any one of claims 3 to 5,
wherein the through-hole includes a first through-hole adjacent to the first edge and a second through-hole adjacent to the second edge,
wherein the current collector includes a third region positioned between the first through-hole and the second through-hole, and
wherein at least one of the third electrode tabs passes through one of the first through-hole or the second through-hole and is connected to the third region.

7. The battery cell of any one of claims 1 to 6, further comprising:
one or more cap assemblies coupled to the case, closing the internal space and including a terminal portion disposed therein.

8. The battery cell of claim 7, further comprising:
a connection member electrically connected to each of the current collector and the terminal portion.

9. The battery cell of claim 8, wherein the through-hole includes a first hole and a second hole, partitioned by the connection member.

10. The battery cell of any one of claims 1 to 9, further comprising:
one or more cap assemblies coupled to the case, closing the internal space and including a terminal portion disposed therein;
wherein the electrode tab includes a positive electrode tab and a negative electrode tab,
wherein the positive electrode tab and the negative electrode tab extend in opposite directions from each other,
wherein the case includes a first opening and a second opening spaced apart from each other, and
wherein the one or more cap assemblies include a first cap assembly closing the first opening and a second cap assembly closing the second opening.

11. The battery cell of any one of claims 1 to 10, wherein the electrode tab and the current collector are connected to each other by welding.
